# EUROPEAN PATENT APPLICATION

(11) **EP 4 501 096 A2**
(43) Date of publication of application: **05.02.2025**
(21) Application number: 24187424.7
(22) Date of filing: 09.07.2024
(51) Int. Cl.: A01D 34/90, A01D 34/416

(54) **STRING TRIMMERS**

(30) Priority: 04.08.2023 US 202363517830 P; 18.01.2024 US 202463622193 P
(71) Applicant: Milwaukee Electric Tool Corporation, Brookfield, WI 53005-2550 (US)
(72) Inventor: Mahamad, Tabrez, Brookfield, Wisconsin, 53005-2550 (US); Libert, Scott, Brookfield, Wisconsin, 53005-2550 (US); Liu, Scott, Dongguan City, GD (CN); Liu, Everest, Dongguan City, GD (CN); Yao, Dave, Dongguan City, GD (CN); Vanko, Calvin, Brookfield, Wisconsin, 53005-2550 (US); Ordonez, Jeniffer, Brookfield, Wisconsin, 53005-2550 (US); Sen, Sourav, Brookfield, Wisconsin, 53005-2550 (US); Long, Robert, Brookfield, Wisconsin, 53005-2550 (US)
(74) Representative: Grünecker Patent- und Rechtsanwälte PartG mbB

(57) **Abstract**

A stringer trimmer (100) includes a housing (102); a control board (148) including control circuitry (114); a frame (166) coupled to the control board (148); and an isolator (174) disposed between the housing (102) and the frame (166), wherein the frame (166) is supported relative to the housing (102) by the isolator (174), and wherein the isolator (174) comprises a shock absorbing material.

## Description

### FIELD

The present disclosure relates generally to outdoor power equipment, and more particularly to trimmers, such as string trimmers.

### BACKGROUND

String trimmers are used to maintain the appearance of a yard by cutting vegetation in hard-to-reach areas, such as along border fences, near planter beds and paved surfaces, between stones associated with walkways, under obstacles (e.g., tables, lawn chairs, etc.), and the like. String trimmers cut vegetation by moving flexible string at high speeds. The string is relatively rigid when moved at high speeds, allowing the string to cut the vegetation. However, the string maintains flexibility such that hard objects (e.g. stone, pavement, wood, etc.) cause the string to deflect and allow the string to pass by the object. Thus, the user can maneuver in tight spaces and at areas that are difficult to reach with other types of lawn maintenance tools, such as lawnmowers, to cut vegetation.

Traditionally, string trimmers were powered by engines which consumed gasoline to drive the string and cut the vegetation. However, recently string trimmers have undergone a transformation to instead utilize electric motors fueled by onboard electrical batteries to drive the string and cut the vegetation. Various challenges exist for operating and controlling these electrically powered string trimmers while also allowing the string trimmer to operate at full operating capacity (e.g., maximum speed and torque).

Accordingly, improvements to string trimmers are desired in the art. In particular, string trimmers which provide high cutting ability without compromising on serviceability or operational lifespan would be advantageous.

### BRIEF DESCRIPTION

In accordance with the present disclosure various aspects and embodiments will be set forth in part in the following description.

In accordance with one embodiment, a string trimmer is provided. The string trimmer includes a housing; a control board including control circuitry; a frame coupled to the control board; and an isolator disposed between the housing and the frame, wherein the frame is supported relative to the housing by the isolator, and wherein the isolator comprises a shock absorbing material.

In accordance with another embodiment, a string trimmer is provided. The string trimmer includes a housing; a motor disposed in the housing; a battery in electrical communication with the motor; a working head including a rotating assembly; an elongated element extending between the housing and the working head; and a drive shaft disposed at least partially in the elongated element, the drive shaft coupling the motor to the working head to rotatably drive the rotating assembly when the motor is activated, wherein the motor is configured to rotatably drive the rotating assembly at a rotational speed greater than 6000 revolutions per minute (RPM) at a torque greater than 25 inch pounds (in*lb).

In accordance with another embodiment, a method of servicing a string trimmer is provided. The method includes opening a housing of a gearbox associated with the string trimmer, the gearbox disposed between a motor of the string trimmer and a drive shaft of the string trimmer, wherein opening the housing exposes an output shaft of the motor; operating on a nut coupled to the output shaft of the motor to remove the nut from the output shaft; axially translating a pinion from the output shaft, the pinion having been previously secured to the output shaft by the nut; installing a replacement pinion on the output shaft, wherein installing the replacement pinion comprises axially translating the replacement pinion onto the output shaft; reinstalling the nut onto the output shaft; and operating on the nut to secure the replacement pinion on the output shaft.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

The detailed description that follows makes reference to the appended figures, in which:
FIG. 1 is a perspective view of a string trimmer in accordance with embodiments of the present disclosure;
FIG. 2 is a partial cross-sectional view of an auxiliary handle of the string trimmer in accordance with embodiments of the present disclosure;
FIG. 3 is a partial cross-sectional side view of a housing of the string trimmer in accordance with embodiments of the present disclosure;
FIG. 4 is a perspective view of a portion of the housing of the string trimmer and a control board coupled therewith in accordance with embodiments of the present disclosure;
FIG. 5 is a front perspective view of the control board disposed in a frame in accordance with embodiments of the present disclosure;
FIG. 6 is a rear perspective view of the control board disposed in the frame in accordance with embodiments of the present disclosure;
FIG. 7 is a perspective view of a gearbox of the string trimmer in accordance with embodiments of the present disclosure;
FIG. 8 is a cross-sectional view of the gearbox as seen along Line A-A in FIG. 7 in accordance with embodiments of the present disclosure;
FIG. 9 is a cross-sectional side view of a portion of the trimmer as seen along Line B-B in FIG. 1 in accordance with embodiments of the present disclosure;
FIG. 10 is a cross-sectional side view of a portion of the trimmer as seen along Line B-B in FIG. 1 in accordance with embodiments of the present disclosure;
FIG. 11A is a cross-sectional side view of a working head of the string trimmer in accordance with embodiments of the present disclosure;
FIG. 11B is a cross-sectional side view of a portion of the working head of the string trimmer in accordance with embodiments of the present disclosure;
FIG. 12 is a side view of a housing of the working head of the string trimmer in accordance with embodiments of the present disclosure;
FIG. 13 is a perspective view of the working head of the string trimmer in accordance with embodiments of the present disclosure;
FIG. 14 is a perspective view of a guard for protecting a user against flying debris picked up by the working head of the string trimmer in accordance with embodiments of the present disclosure;
FIG. 15 is a graph depicting rotational speed as a product of torque in accordance with embodiments of the present disclosure; and
FIG. 16 is a graph depicting power as a product of torque in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

In general, string trimmers described herein can exhibit high operating power over prolonged use. Whereas traditional string trimmers begin to fail at power outputs of approximately 2 horsepower (Hp), string trimmers described herein can continue to operate effectively in excess of 3 Hp of power output. To operate at such high power outputs, string trimmers described herein can include one or more features described herein. For example, the string trimmer can include an auxiliary handle with a strengthened attachment structure for coupling the auxiliary handle to an elongated element of the string trimmer. The string trimmer can also include a housing having a venting arrangement that provides efficient airflow through the housing to maintain electrical components of the string trimmer in operational temperature ranges over prolonged periods of use (e.g., in excess of 15 minutes, or even in excess of 30 minutes). String trimmers described herein can include structural features that protect control boards (e.g., printed circuit boards) from damage resulting from shock and transmission of forces from operation. By way of example, the structural feature(s) can include a frame that supports the control board and that is coupled to the housing of the string trimmer through an isolator, such as a rubber element, that prevents transmission of force to the control board. The frame can further prevent, or mitigate, occurrence of warping that might otherwise occur as portions of the control board heat up during prolonged use. In an embodiment, the string trimmer can include a gearbox that allows for easy access to an output shaft of a motor. The output shaft can drive a pinion of the gearbox to drive a working head to cut vegetation. The pinion can be secured to the output shaft by way of a removable element, such as a nut, that can removed from the output shaft, e.g., using a standard wrench. The removable nut can allow an operator to replace the pinion without having to overcome frictional forces associated with press fit pinions. In an embodiment, the string trimmer can include bearings to support a drive shaft coupled to the motor, where the bearings are oversized to accommodate high loading forces. The bearings can be spaced apart from each other, e.g., by a spacer, to further increase loading strength. In an embodiment, the string trimmer can include a guard that protects a user from debris picked up by rotation of string projecting from the working head. The guard can be repositionable between a plurality of different positions or orientations. In an embodiment, the guard can include a reinforcement to prevent the guard from breaking when the guard is impacted by large objects picked up by the string. In some instances, a housing of the working head can include a rib projecting in a direction away from the housing towards the guard. The tab can reduce a dimension of a gap between the housing and the guard. The gap can otherwise become full of cut vegetation which might damage the working head or another part of the string trimmer as a result of high loading forces transmitted through the string trimmer. In an embodiment, the housing of the working head can include an oversized opening for receiving an elongated element extending from a rear housing (wherein the motor is supported). The opening can be sized to allow the bearings supporting the drive shaft to fit within the opening. The housing can include a deformable portion to allow the operator to squeeze the housing together around the elongated element to secure the elongated element to the housing of the working head. In some instances, a seal (such as a gasket) can be disposed in the gap to prevent ingress of debris into the housing of the working head. The gap may include structural aspects and/or features that allow the seal to effectively seal the opening and prevent ingress of debris. For example, ends of the gap can be tapered or otherwise shaped such that the seal does not deflect from the gap and remains in the ideal position for sealing purposes.

As described above, string trimmers described herein can exhibit overall increased performance compared to known string trimmers. String trimmers described herein can operate at peak power outputs in excess of 3 Hp, operate rotational assemblies including string at rotational speeds greater than 6,000 revolutions per minute while maintaining torque in excess of 25 inch*pounds (in*lbs). As such, string trimmers described herein are unlikely to become bogged down under heavy loads, such as encountered when cutting through dense vegetation.

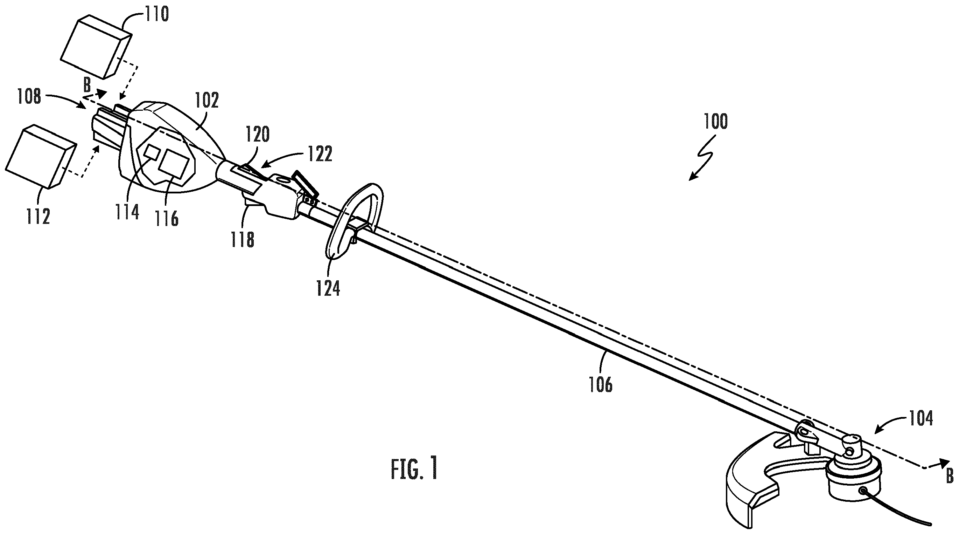

Referring now to the drawings, FIG. 1 illustrates a string trimmer 100 in accordance with an exemplary embodiment. The string trimmer 100 is a handheld power tool configured to be held and operated by a user to trim vegetation. While not depicted, in some implementations the string trimmer 100 can include a harness or shoulder strap that allows the user to more easily support the weight of the string trimmer 100 during use. In general, the string trimmer 100 can include a housing 102 and a working head 104. The housing 102 is spaced apart from the working head 104. In an embodiment, the housing 102 and working head 104 are coupled together through an elongated element 106. The elongated element 106 an spatially fix the housing 102 and working head 104 at a fixed relative distance and orientation.

The housing 102 can define a battery receiving area 108. The battery receiving area 108 is configured to receive one or more batteries, such as a first battery 110 and a second battery 112. In an embodiment, the first and second batteries 110 and 112 can slide into the battery receiving area 108. The first and second batteries 110 and 112 can each be secured (locked) in the battery receiving area 108 to prevent accidental detachment during use of the string trimmer 100. The battery receiving area 108 can include electrical contacts that electrically couple the first and second batteries 110 and 112 to a control circuitry 114 and/or a motor 116 to provide power to the motor 116 during use of the string trimmer 100. In an embodiment, the first and second batteries 110 and 112 can be interchangeable with one another. For instance, the first and second batteries 110 and 112 can have a same size as one another, a same shape as one another, a same voltage as one another, or any combination thereof. In an embodiment, the first and second batteries 110 and 112 are each approximately 144 watt-hour batteries.

The control circuitry 114 can include a processor. The processor be any suitable processing device (e.g., a processor core, a microprocessor, an ASIC, a FPGA, a controller, a microcontroller, etc.) and can be one processor or a plurality of processors that are operatively connected. The processor can be coupled to memory including one or more non-transitory computer-readable storage media, such as RAM, ROM, EEPROM, EPROM, one or more memory devices, flash memory devices, etc., and combinations thereof. The memory can store information that can be accessed by the processor. For instance, the memory (e.g., one or more non-transitory computer-readable storage mediums, memory devices) can include computer-readable instructions that can be executed by the processor. The instructions can be software, firmware, or both written in any suitable programming language or can be implemented in hardware. Additionally, or alternatively, the instructions can be executed in logically and/or virtually separate threads on processor. For example, the memory can store instructions that when executed by the processor cause the processor to perform operations such as any of the operations and functions of any of the computing system(s) as described herein. For instance, the processor can include a motor controller that controls feed of electricity to the motor 116. The motor controller can use pulse width modulation (PWM) to modulate current supplied to the motor 116 to affect a speed of the motor 116.

In an embodiment, the string trimmer 100 includes a trigger 118. The trigger 118 can be contained (e.g., captured) at least in part in the housing 102. The trigger 118 can be accessed and controlled by the user to affect the operating speed of the motor 116 (e.g., using PWM as described above). A safety 120 may be further provided to prevent operation of the motor 116 in the absence of the user's hand at a handle 122 of the string trimmer 100. As described below, string trimmers 100 contemplated by embodiments described herein are intended to operate at high speeds with high output power. Accordingly, the use of a safety 120 mitigates activation of the motor 116 and high powered operation without the user securely grasping the handle 122.

An auxiliary handle 124, sometimes referred to as a bale handle, may allow the user to grasp the string trimmer 100 with two hands during use. The auxiliary handle 124 may be disposed along the elongated element 106. In some instances, the auxiliary handle 124 is fixed relative to the elongated element 106. For example, the auxiliary handle 124 may not be moved between different positions or orientations along the elongated element 106. In other implementations, the auxiliary handle 124 may be adjustable between two or more different positions relative to the elongated element 106. For example, the auxiliary handle 124 can be translated along a length of the elongated element 106, rotated about the elongated element 106, or both. The user can thereby adjust the position of the auxiliary handle 124 to better accommodate the user's preferred operating orientation.

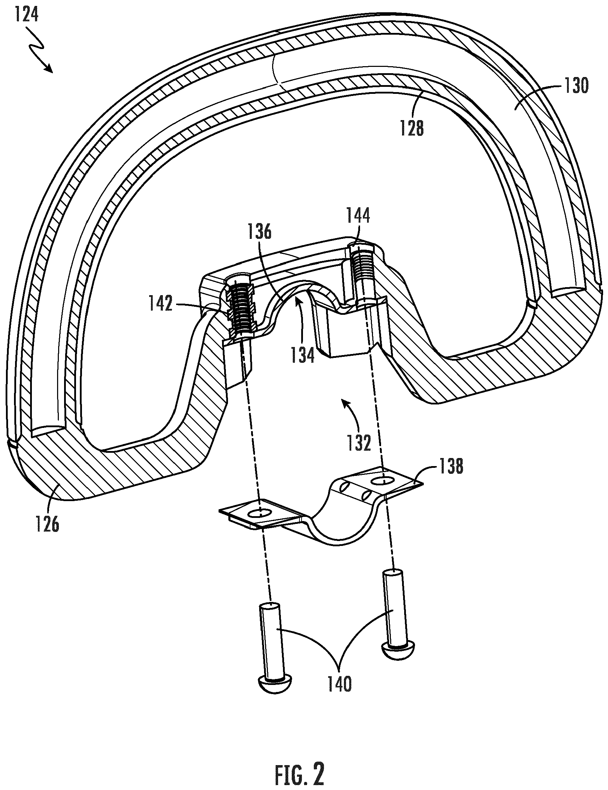

FIG. 2 illustrates a partial cross-sectional view of the auxiliary handle 124 as seen in accordance with an example embodiment. The auxiliary handle 124 includes a bale handle 126 defining a gripping area 128 configured to be grasped by the user's hand. The bale handle 126 can include a hollow core defining a cavity 130. The cavity 130 can extend through at least a portion of the gripping area 128. The presence of the cavity 130 can reduce the weight of the bale handle 126. The bale handle 126 can further include a receiving area 132 at which the auxiliary handle 124 is to be coupled to the elongated element 106 (FIG. 1). The receiving area 132 can generally define a recessed area in which the elongated element 106 can be received. The receiving area 132 can include a receiving surface 134 configured to receive and support the elongated element 106. By way of non-limiting example, the elongated element 106 can include a tubular structure having a generally circular cross section. The receiving surface 134 can include an arcuate surface configured to match, or approximately match, the shape and size of the generally circular cross section of the tubular structure. In some implementations, the receiving surface 134 can be defined by the bale handle 126 itself. For example, the bale handle 126 can be formed from a polymeric material, such as injection molded plastic. The receiving surface 134 can be unitary with the polymeric material and formed directly into the bale handle 126. In other implementations, the receiving surface 134 can be formed by a separate element, such as a support plate 136. The support plate 136 can be disposed between the bale handle 126 and the elongated element 106. The support plate 136 can disperse force across a greater area of the bale handle 126. In an embodiment, the support plate 136 is formed from a relatively rigid material, such as a metal. The auxiliary handle 124 can further include a locking plate 138 configured to be drawn toward the bale handle 126 by one or more fasteners, such as threaded fasteners 140. As the threaded fasteners 140 are threaded into openings 144 of the bale handle 126, the locking plate 138 is drawn towards the support plate 136. With the elongated element 106 disposed between the locking plate 138 and support plate 136, threading the threaded fasteners 140 into position causes the auxiliary handle 124 to become fixed relative to the elongated element 106.

Over prolonged use, the auxiliary handle 124 may become loose relative to the elongated element 106 if the threaded fasteners 140 are not sufficiently tightened. To prevent the auxiliary handle 124 from becoming loose, some users may overtighten the threaded fasteners 140 past the supporting capacity of threads located in the bale handle 126. As a result, the threads of the bale handle 126 can become stripped, making future use of the auxiliary handle 124 difficult. In some instances, the user may be required to obtain a new auxiliary handle 124 if damage to the threads is too significant. To prevent damage to the threads, the auxiliary handle 124 can further include an insert 142. The insert 142 may be disposed in the opening 144 of the bale handle 126. In some instances, the insert 142 can be inserted into the opening 144 through a side opposite a side of the locking plate 138. The opening 144 may not allow the insert 142 to pass through the bale handle 126 in a direction towards the locking plate 138. For example, the opening 144 can define a shelf or surface upon which the insert 142 can rest. The insert 142 receives the threaded fasteners 140 and maintains the locking plate 138 to the support plate 136. The threaded fasteners 140 can pull the insert 142 into the shelf to secure the locking plate 138 to the support plate 136. The insert 142 can be formed from a material having a modulus of elasticity higher than a modulus of elasticity of the bale handle 126 itself. For instance, by way of non-limiting example, the insert 142 can be formed from a metal, such as steel or aluminum, and the bale handle 126 can be formed from plastic. In some implementations, the insert 142 can be overmolded by the body of the bale handle 126, e.g., during an injection molding process. Use of the insert prevents stripping of threads in the bale handle 126, e.g., as a result of overtightening, allowing the user to tighten the threaded fasteners 140 sufficiently to prevent relative movement between the auxiliary handle 124 and the elongated element 106 once a desired relationship therebetween is achieved.

In an embodiment, the bale handle 126, or a portion thereof, can be overmolded with a secondary material different than a material of the bale handle 126. For example, the secondary material can include an elastomeric material, such as rubber.

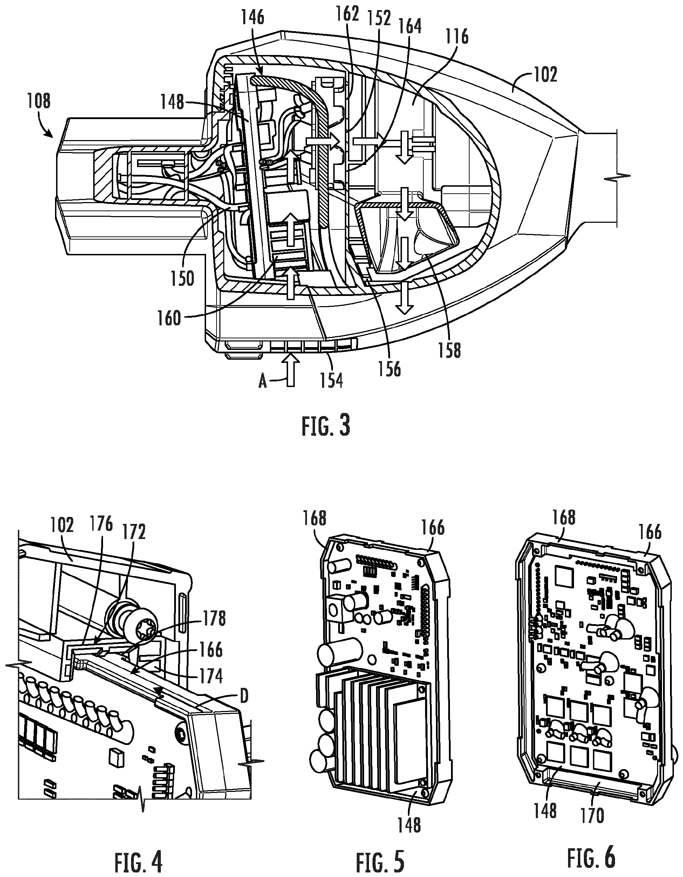

FIG. 3 illustrates a view of the housing 102 with a portion of the housing 102 removed to expose an internal area 146 defined by the housing 102. As depicted, the internal area 146 can contain (house) the motor 116. The internal area 146 can further contain a control board 148 (e.g., a printed circuit board (PCB)) including the control circuitry 114. Wiring 150 can extend from the receiving area 108, e.g., from a location where the first and second batteries 110 and 112 are interfaced with the receiving area 108, to the control board 148 and from the control board 148 to the motor 116. In some embodiments, the internal area 146 can include a partition 152 disposed between the receiving area 108 and the motor 116. In an embodiment, the partition 152 can be disposed between the control board 148 and the motor 116.

The housing 102 can include an air inlet 154 disposed on a first side of the partition 152 and an air outlet 156 disposed on a second side of the partition 152, the second side being different than the first side. The motor 116 can include an airflow passageway 158 through which airflow A can pass. The motor 116 may include a fan or other type of airflow generating element that excites airflow A through the housing 102 when the motor 116 is active. As the speed of the motor 116 increases, the volume of airflow A passing through the housing 102 increases. As depicted in FIG. 3, airflow A can enter the air inlet 154 disposed on a rear side of the partition 152 and initially pass by the control board 148. In some instances, the control board 148 can include a heat sync 160 which extracts heat from one or more components of the control board 148. The airflow A entering the housing 102 through the air inlet 154 passes by the heat sync 160 and absorbs heat to maintain the temperature of the control board 148 within a suitable operational range.

The airflow A can pass through the partition 152 at one or more apertures disposed thereon. For example, airflow A can pass through a first aperture 162 and a second aperture 164. The first and second apertures 162 and 164 can be spaced apart from one another such that airflow A passing through the first and second apertures 162 and 164 is introduced to substantially different portions of the motor 116. Some airflow A may pass through the motor 116 to cool internal components of the motor 116 while other airflow A may pass around the motor 116, e.g., to cool an external portion of the motor 116. The airflow A can rejoin together and exit the housing 102 through the air outlet 156.

In an embodiment, the air inlet 154 can include a plurality of apertures extending through the housing 102. The apertures can be spaced apart from each other, e.g., by portions of the housing 102. The apertures may be sized and/or shaped to prevent ingress of contamination into the housing 102. The air outlet 156 can include a plurality of apertures extending through the housing 102. The apertures can be spaced apart from each other, e.g., by portions of the housing 102. In some instances, the size and/or shape of the apertures of the air inlet 154 can be different than the size and/or shape of the apertures of the air outlet 156. For example, the apertures of the air inlet 154 can have a generally square shape while the apertures of the air outlet 156 can have an elongated rectilinear shape.

FIGS. 4 to 6 illustrate the control board 148 in accordance with an example embodiment. Specifically, FIG. 4 illustrates a view of the control board 148 as disposed within the housing 102, FIG. 5 illustrates a front perspective view of the control board 148, and FIG. 6 illustrates a rear perspective view of the control board 148. In some implementations, the front of the control board 148 is disposed closer to the motor 116 when the control board 148 is installed in the housing 102.

In an embodiment, the control board 148 can be coupled to the housing 102 through a frame 166. The frame 166 can generally include a body formed from a relatively rigid material. For example, the frame 166 can be formed from a metal, an alloy, a rigid polymer, or the like. By way of non-limiting example, the frame 166 can be formed from aluminum, such as die cast aluminum, such as die cast A380 aluminum. The frame 166 is configured to resist flexing when load is applied. The frame 166 is configured to extend around at least a portion of a perimeter of the control board 148. The frame 166 can include a flange 168 and a mounting portion 170 extending from the flange 168. The flange 168 can define a major dimension oriented transverse to a major surface of the control board 148 to resist flexure in a direction perpendicular to a major surface of the control board 148. The mounting portion 170 can define a mounting surface against which the control board 148 is rested against when the control board 148 is coupled to the frame 166. The mounting surface can be oriented parallel with the major surface of the control board 148. To install the frame 166 and the control board 148 together, the control board 148 is moved towards the mounting portion 170 until the control board 148 rests against the mounting surface. One or more fasteners (e.g., threaded fasteners) can be introduced into openings extending through the frame 166. The fasteners can then interact with the control board 148 to couple the frame 166 and control board 148 together.

Use of the frame 166 to support the control board 148 can reduce flexing of the control board 148 which may be exhibited when the motor 116 (FIG. 3) is operated at high speeds. During high speed operation, the control board 148, and more particularly components of the control board 148, may become hot which causes the control board 148 to warp. Additionally, forces acting on the control board 148, e.g., from the housing 102, the motor 116, the airflow A, or other aspects of the string trimmer 100 may cause the control board 148 to deflect/deform. The frame 166 can mitigate or reduce such flexure. The frame 166 can also provide a mounting protocol to mount (couple) the control board 148 to the housing 102 (directly or indirectly).

Referring to FIG. 4, the frame 166 can be coupled to the housing 102 by way of a compliant interface. 172. The compliant interface 172 can permit the frame 166 to move relative to the housing 102. For example, the compliant interface 172 can include an isolator 174 disposed between the frame 166 and the housing 102. The isolator 174 can be disposed in a channel 176 of the housing 102. The isolator 174 can define a frame receiving area 178 in which the frame 166 is received and secured. The frame receiving area 178 may have a profile, e.g., a surface shape or configuration, that allows the frame 166 to be inserted into the frame receiving area 178 and which also prevents accidental removal of the frame 166 from the isolator 174. In some instances, the frame 166 is insertable into the frame receiving area 178 when the housing 102 is taken apart. For example, the housing 102 can have a multi-piece construction, including, e.g., a first portion and a second portion (such as a clamshell configuration). The first and second portions may be detachable from one another. When the first and second portions are detached from one another, the isolator 174 may become exposed, allowing insertion of the frame 166 into the frame receiving area 178. In particular, the isolator 174 may be formed from a plurality of pieces, such as a first piece and a second piece. The first piece of the isolator 174 may be associated with the first portion of the housing 102 and the second piece of the isolator 174 may be associated with the second portion of the housing 102. By detaching the first and second portions of the housing 102 from one another, the frame 166 may be slid in a direction D into the first piece of the isolator 174 until seated therewith. The second portion of the housing 102 can then be introduced to the frame 166 such that the frame 166 seats within the second piece of the isolator 174. Yet other configurations and methodologies are contemplated herein.

The isolator 174 can be formed from a relatively flexible material. In an embodiment, the isolator 174 comprises, or consists essentially of, a deformable material such as an elastomer. Exemplary elastomers include natural rubber (NR), styrene-butadiene rubber (SBR), butyl rubber, nitrile (NBR), neoprene (CR), ethylene propylene diene monomer (EPDM), silicone, viton, polyurethane (AU), and hydrogenated nitrile (HNBR). In some embodiments, the elastomer can include a filler, such as graphite, glass, aromatic polyester (EKONOL^{®}), bronze, zinc, boron nitride, carbon and/or polyimide. In an embodiment, the isolator 174 is overmolded in the channel 176 of the housing 102. For instance, the isolator 174 can be overmolded by an injection molding process.

The isolator 174 is configured to prevent transmission of force from the housing 102 to the control board 148. Force may occur, for example, as a result of shock incurred during drop testing, as a result of shipping, during trailer transport to and from jobsite, and the like. Mitigating the transmission of such force (shock) from the control board 148 can reduce the likelihood of damage to components associated with the control board 148 and increase operational lifespan of the string trimmer 100. Additionally, high operating forces associated with use of the string trimmer 100 may be isolated from being transmitted to the control board 148.

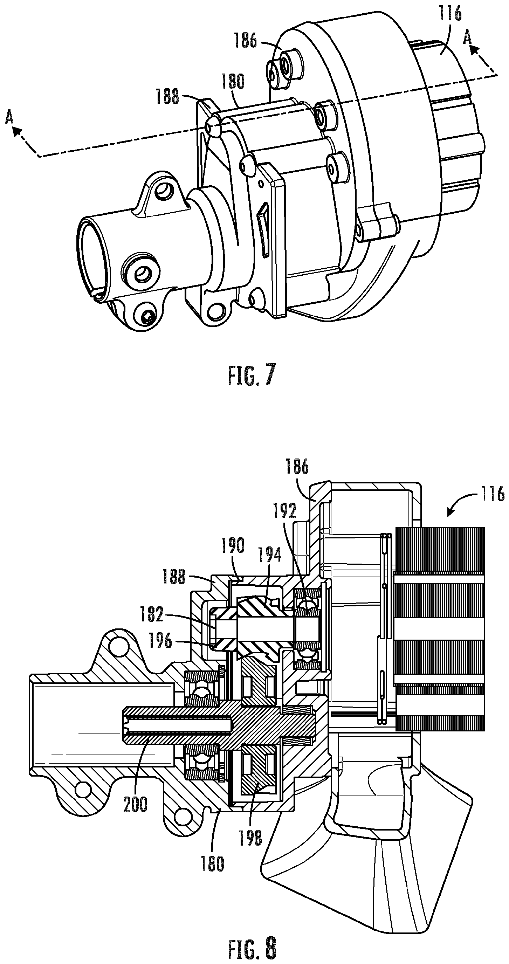

FIG. 7 illustrates a gearbox 180 coupled to the motor 116 in accordance with an example embodiment. The gearbox 180 is configured to convert output torque from an output shaft 182 (FIG. 8) of the motor 116 to a driving torque for transmission to the working head 104 (FIG. 1). The gearbox 180 may be disposed at least partially within the housing 102 (FIG. 1) of the string trimmer 100. The gearbox 180, or a portion thereof, may extend from the housing 102. The gearbox 180 can include a housing 184 with a multipiece construction. For example, the housing 184 can include a first housing portion 186 and a second housing portion 188. The first and second housing portions 186 and 188 can be coupled together, e.g., using one or more threaded fasteners. The first housing portion 186 may be selectively removed from the second housing portion 188 by removing the one or more threaded fasteners and translating, rotating, or roto-translating the first and second housing portions 186 and 188 relative to one another. A seal 190 (FIG. 8) can be disposed at a junction between the first and second housing portions 186 and 188 to prevent egress of any fluid contained within the gearbox 180. For example, the gearbox 180 can include a transmission fluid, such as a fluid lubricant, to reduce friction and reduce wear of the gearbox 180. In some instances the first housing portion 186 can be coupled to the motor 116 by one or more fasteners, e.g., one or more threaded fasteners. Thus, removal of the second housing portion 188 from the first housing portion 186 may not affect the position of the first housing portion 186 relative to the motor 116.

FIG. 8 illustrates a cross-sectional view of the gearbox 180 and a portion of the motor 116 as seen along Line A-A in FIG. 7 in accordance with an example embodiment. As depicted, the motor 116 includes an output shaft 182 that extends into the gearbox 180. The output shaft 182 can be supported by a bearing 192. The bearing 192 can be disposed within the gearbox 180 and rotationally support the output shaft 182. A pinion 194 is coupled to the output shaft 182. The pinion 194 can be rotationally keyed with the output shaft 182 such that rotational movement of the output shaft 182 causes the pinion 194 to rotate about a central axis. By way of non-limiting example, the pinion 194 can include internal splines that interface with external splines disposed on an external surface of the output shaft 182. The splines of the pinion 194 and output shaft 182 can mesh with one another to prevent the pinion 194 from slipping relative to the output shaft 182.

A nut 196 can be installed on the output shaft 182 and tightened relative to an engagement surface (e.g., threads) of the output shaft 182 to lock the pinion 194 on the output shaft 182. The nut 196 can include, for example, a hex nut having a plurality of sides engageable by a tool, such as a wrench, to allow a user to install and remove the nut 196 from the engagement surface. The nut 196 may be accessible by a user (e.g., an installer, an end user, a service technician, etc.) when the second housing portion 188 is uncoupled and removed from the first housing portion 186. In some instances, the user may replace the pinion 194 by removing the second housing portion 188 from the first housing portion 186 and uncoupling the nut 196 from the engagement surface. The pinion 194 can then be translated from the output shaft 182 and replaced using a reverse installation process. For instance, a replacement pinion can be axially translated onto the output shaft 182 and the nut 196 can be reinstalled onto the output shaft 182 and operated on until the replacement pinion is secured to the output shaft 182 such that the replacement pinion is prevented from translating along the output shaft 182 (e.g., the replacement pinion is tightened). It is noted that the process described above, or portions of the process (e.g., axially translating the pinion 194 from the output shaft 182) can be performed by hand, e.g., without the use of tools, such as pullers. Due to high operating loads incurred by the string trimmer 100, replacement of the pinion 194, while not typically expected, may be required in some instances. Use of a removable nut 196 allows the user to quickly gain access to the pinion 194, allowing easy replacement without requiring special tools or parts frequently used, e.g., to pull a press fit gear or pinion on the output shaft 182.

As depicted in FIG. 8, the gearbox 180 can further include a driven gear 198 interfaced with the pinion 194 and rotatably driven thereby during output of the motor 116. The driven gear 198 is rotationally keyed with an output shaft 200 that can interface with a portion of the elongated element 106 to transfer rotational output to the working head 104 (FIG. 1).

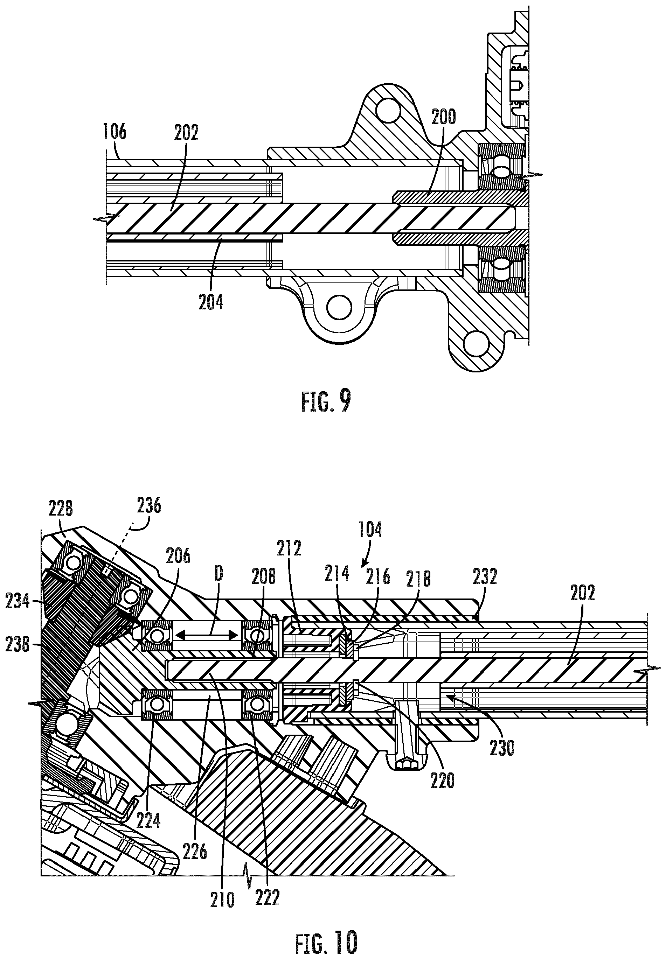

FIGS. 9 and 10 depict portions of a cross section of the string trimmer 100 as seen along Line B-B in FIG. 1. Specifically, FIG. 9 depicts a portion of the string trimmer 100 as seen at a location adjacent to the housing 102 and FIG. 10 depicts a portion of the string trimmer 100 as seen at a location adjacent to the working head 104. Referring initially to FIG. 9, the output shaft 200 is rotatably driven by the motor 116 FIG. 8). The output shaft 200 is coupled to a drive shaft 202 disposed within the elongated element 106. The drive shaft 202 extends between the housing 102 and the working head 104. The drive shaft 202 can be rotationally keyed to the output shaft 200, e.g., by a splined interface. The drive shaft 202 can be supported in the elongated element 106 by a supporting member 204. The supporting member 204 can support the drive shaft 202 and maintain the drive shaft 202 in a generally central position with respect to the elongated element 106. The supporting member 204 can include a low friction interface to reduce drag on the drive shaft 202 during rotational movement thereof.

As depicted in FIG. 10, the drive shaft 202 extends to the working head 104 and is coupled to a pinion gear 206 located at the working head 104. In an embodiment, the pinion gear 206 includes a recess 208 into which an end 210 of the drive shaft 202 is insertable. The recess 208 can include splined features that interface with complementary splines on the drive shaft 202 to rotationally key the pinion gear 206 to the drive shaft 202. The drive shaft 202 can be guided and maintained in a generally central position with respect to the elongated element 106 by a supporting member 212. The supporting member 212 can include a bushing receiving area 214 in which a bushing 216 is disposed. The bushing 216 can provide a low friction interface to permit rotation of the drive shaft 202 without incurring significant power loss. In an embodiment, the bushing 216 is formed from a self-lubricating material. In a more particular embodiment, the bushing is formed from an oil impregnated metal, and more particularly an oil impregnated bronze material. A clip 218, such as a C-ring, can be coupled to the drive shaft 202, such as at a groove 220 thereof, to secure the bushing 216 at a relatively fixed location.

The pinion gear 206 can be supported relative to a housing 228 of the working head 104 by a plurality of bearings, such as a first bearing 222 and a second bearing 224. In an embodiment, the first and second bearings 222 and 224 can share at least one of a same size, a same construction type, or both. In one implementation, the first and second bearings 222 and 224 both have an outer diameter of 26 millimeters (mm). The first and second bearings 222 and 224 can be spaced apart from one another and maintained at a relatively fixed distance D by a spacer 226. In an embodiment, the distance D is in a range of 10 mm and 25 mm, such as in a range of 15 mm and 20 mm. In a particular embodiment, the distance D is approximately 18 mm. Without wishing to be bound by any particular theory, it is believed that a distance D in a range of 10 mm and 25 mm, and more particularly approximately 18 mm, provides stability for the pinion gear 206 without requiring an overly large sized housing 228.

To install the drive shaft 202 in the housing 228, the pinion gear 206, bearings 222 and 224, and spacer 226 are first installed within an opening 230 in the housing 228. The supporting member 212 is then installed with the bushing 216 and the drive shaft 202. In some instances, the elongated element 106 is installed simultaneously with the drive shaft 202. The opening 230 may have an inner diameter size greater than an outer diameter size of the elongated element 106. To compensate for the size difference, a shim 232 can be inserted into the opening 230 and positioned between the elongated element 106 and the housing 228. In an embodiment, the shim 232 can contact the supporting member 212.

The pinion gear 206 is operably coupled to a driven gear 234. The driven gear 234 can interface with the pinion gear 206 such that the driven gear 234 is driven about a central axis 236 as the pinion gear 206 rotates. The driven gear 234 can be rotationally keyed to an axle 238. For instance, the axle 238 and driven gear 234 can define a splined interface which prevents the axle 238 from slipping relative to the driven gear 234. Rotational input generated by the motor 116, can thus drive the axle 238 to rotate about the central axis 236.

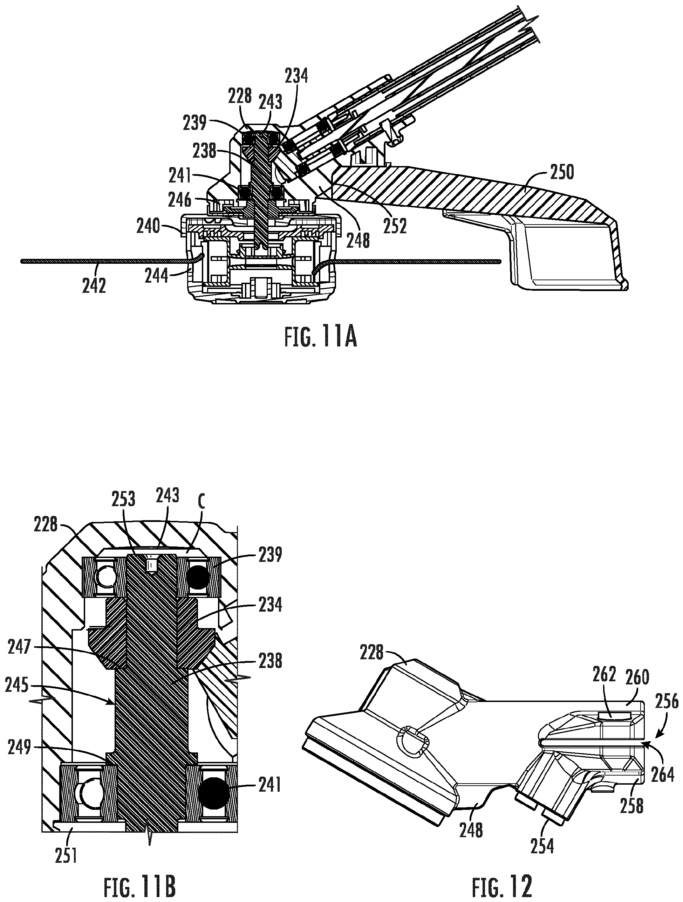

FIG. 11A illustrates the working head 104 as depicted along Line B-B in FIG. 1. The axle 238 is supported by a plurality of bearings, such as a first bearing 239 and a second bearing 241. In an embodiment, the first bearing 239 is disposed above the second bearing 241 when the string trimmer 100 is in normal operating use, i.e., as depicted in FIG. 11A. In an embodiment, the first bearing 239 comprises a first dimension and the second bearing 241 comprises a second dimension, wherein the first dimension is less than the second dimension. The housing 228 of the working head can include a recess 243 in which the first and second bearings 239 and 241 are disposed. In an embodiment, the recess 243 can define a stepped profile including, for example, a first dimension where the first bearing 239 is disposed and a second dimension where the second bearing 241 is disposed. In an embodiment, the first and second bearings 239 and 241 can rest against supporting surfaces defined by a sidewall of the recess 243. The support surfaces can support the first and second in an axial direction, i.e., in a direction parallel with the axle 238.

Referring to FIG. 11B, the first bearing 239 can provide rotational support to the axle 238, i.e., in a lateral direction, to maintain concentricity of the axle 238 relative to the recess 243. The first bearing 239 can further provide axial support for the driven gear 234. The axle 238 can have a profiled outer surface 245 including, for example, a step 247 against which the driven gear 234 rests. The axle 238 can further include a step 249 against which the second bearing 241 rests. The axle 238 and associated components can be retained in the recess 243 by a snap ring 251. When the snap ring 251 is positioned in the recess 243, the snap ring 251 presses against the second bearing 241 which can press against the step 249 of the axle 238. The axle 238 is thus pressed towards the driven gear 234. The step 247 of the axle 238 presses into the driven gear 234 which presses against the first bearing 239. Thus, the forces lock the components within the housing 228. In some instances, the recess 243 can include clearance C between the end 253 of the axle 238 and the housing 228. The clearance C can allow for installation of the assembly and provide tolerance during use of the string trimmer 100. In the installed state, the snap ring 251 can exert a force on the second bearing 241 in a range between 50 to 100 newtons (N). The force exerted on the second bearing 241 by the snap ring 251 does not transfer to the first bearing 239 due to the positioning of the system. In this regard, the smaller first bearing 239 is not exposed to high operating forces which would decrease operational lifespan of the string trimmer 100.

As illustrated, the axle 238 extends through the housing 228 and interfaces with a rotating assembly 240 such that the axle 238 drives the rotating assembly 240 to rotate and drive string 242 through one or more feeder openings 244 in the rotating assembly 240. The rotating assembly 240 can selectively deploy string 242 through the feeder opening(s) 244 to maintain the string 242 at a desired length.

A counterweight 246 can be disposed in the housing 228. The counterweight 246 can have a mass of at least 50 grams (g), such as at least 100 g, such as at least 150 g, such as at least 200 g. The counterweight 246 can be disposed in an opening above the rotating assembly 240 and below the driven gear 234. In an embodiment, the counterweight 246 can extend around at least a portion, such as all, of the axle 238. The counterweight 246 may be coupled to the housing 228 or an intermediary component of the working head 104. For instance, in an embodiment, the counterweight 246 can be coupled to the housing 228 by a plurality of threaded fasteners.

The counterweight 246 can offset the weight of the first and second batteries 110 and 112 depicted in FIG. 1. In some implementations, the first and second batteries 110 and 112 can have a combined weight exceeding 5 pounds (lbs), such as greater than at least 6 lbs. The counterweight 246 may also offset the weight of the motor 116. In some embodiments, the counterweight 246 may be removable from the housing 228. The user may adjust the counterweight 246, such as by selecting between a plurality of different counterweights each having a different mass. The user can thus balance the rotational moment of the string trimmer 100 in view of desired operating parameters, the location of the auxiliary handle 124, and other considerations particular to each individual user.

FIG. 12 depicts the working head 104 as seen from an external side view. The housing 228 of the working head 104 can include a rib 248 extending towards a guard 250 (FIG. 11A) of the string trimmer 100. In an embodiment, the rib 248 can be integral with the housing 228. For example, the rib 248 and housing 228 can be formed from a single (unitary) piece having a monolithic construction. The rib 248 can extend towards the guard 250 a sufficient distance to reduce the size of a gap 252 (FIG. 11A) disposed between the guard 250 and the housing 228. Gaps 252 between the guard 250 and housing 228 can introduce areas where vegetation becomes trapped during cutting operations. In particular, long grass and brush cut by the string 242 may become wound around the housing 228 and wedged within the gap 252. Performance of the string trimmer 100 declines as vegetation becomes trapped in the gap 252. The user is required to stop cutting operations to reduce the trapped vegetation. This is both time consuming and may deter the user from operating the string trimmer 100. Moreover, removing the trapped vegetation may require the user to have their hands in close proximity to the string 242, presenting an opportunity for the user to become hurt should the string trimmer 100 accidently turn on. To mitigate this risk and reduce the inconvenience of trapped vegetation, the rib 248 can close the gap 252 and prevent entanglement of vegetation. In an embodiment, the gap 252 can be reduced in dimension to have a gap size of less than 2 mm between the rib 248 and the guard 250, such as less than 1.8 mm, such as less than 1.6 mm, such as less than 1.4 mm, such as less than 1.2 mm. In an embodiment, the gap 252 between the rib 248 ad the guard 250 can be approximately 1.1 mm.

Referring still to FIG. 12, the housing 228 can include a guard attachment feature 254 onto which the guard 250 can be coupled. The guard attachment feature 254 can include, for example, one or more threaded openings which receive threaded fasteners. The threaded fasteners can extend through the guard 250 and be tightened relative to the guard attachment feature 254 to secure the guard 250 to the housing 228.

Attaching the housing 228 to the elongated element 106 (FIG. 1) may be performed at least in part by deforming the housing 228. For example, the housing 228 can include a split structure 256 including a first portion 258 and a second portion 260 that may be drawn together, e.g., by a threaded fastener 262. After inserting the elongated element 106 into the opening 230 in the housing 228, the first and second portions 258 and 260 can be drawn together, e.g., by the threaded fastener 262, to clamp the elongated element 106 within the opening 230. A gap 264 disposed between the first and second portions 258 and 260 can draw closed, or at least the first and second portions 258 and 260 can be drawn together to reduce a dimension of the gap 264.

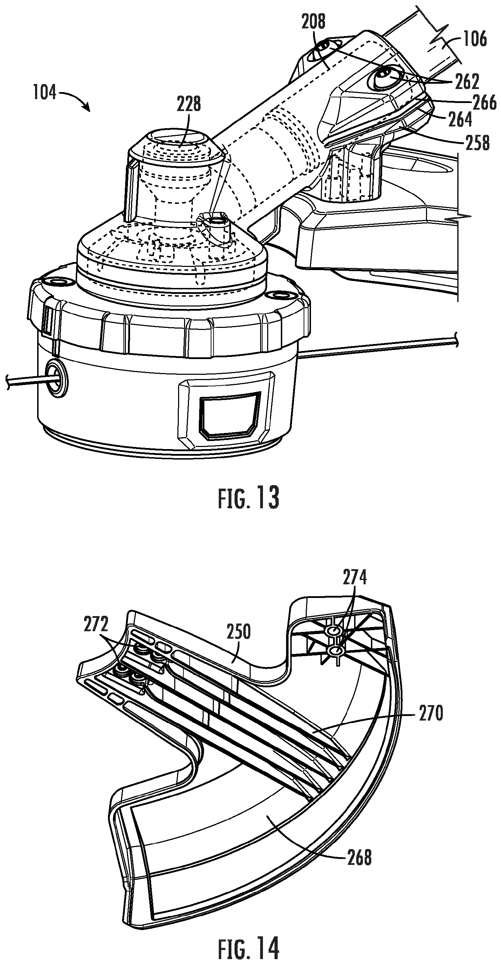

FIG. 13 illustrates a seal 266 disposed in the gap 264. The seal 266 may include a gasket formed from an elastomer. Exemplary elastomers include natural rubber (NR), styrene-butadiene rubber (SBR), butyl rubber, nitrile (NBR), neoprene (CR), ethylene propylene diene monomer (EPDM), silicone, viton, polyurethane (AU), and hydrogenated nitrile (HNBR). In some embodiments, the elastomer can include a filler, such as graphite, glass, aromatic polyester (EKONOL^{®}), bronze, zinc, boron nitride, carbon and/or polyimide. As the first and second portion 258 and 260 are drawn together, they can squeeze the seal 266, resulting in a fluid tight seal between the elongated element 106 and the housing 228 of the working head 104.

FIG. 14 illustrates a bottom view of the guard 250 in accordance with an example embodiment. The guard 250 can be formed from a polymeric material using, e.g., an injection molding process. In an embodiment, the guard 250 can define a lower surface 268 which deflects debris and vegetation lifted by the string 242 (FIG. 11A). In an embodiment, a plurality of ribs 270 can extend from the lower surface 268. The ribs 270 can strengthen the guard 250 and allow for improved resistance against impact from large objects lifted by the string 242. As described below, the string trimmer 100 can operate at speeds and peak power outputs greater than traditional string trimmers. Use of ribs 270 along the guard 250 may be required to prevent the guard 250 from breaking when objects impact the guard 250 at speeds and with forces that were previously unknown in the art.

In some instances, the guard 250 can be aligned in a plurality of different orientations with respect to the working head 104 in view of different cutting operations being performed by the string trimmer 100. For example, in the orientation depicted in FIG. 1, the string trimmer 100 may be used to trim vegetation, such as grass, located in hard to reach areas such as under outdoor tables and chairs or near fences or planters. In other instances, the string trimmer 100 may be used as an edger. To use the string trimmer 100 as an edger, the user rotates the string trimmer (e.g., in a range between 45 degrees and 135 degrees) such that the string 242 rotates about an axis that is more parallel to the surface of the ground. During edging operations, the directional travel of lifted vegetation relative to the user is changed as compared to during regular cutting operations (such as depicted in FIG. 1). Accordingly, the user may desire to adjust a position of the guard 250 between these two different operations to protect the suer against lifted vegetation. In this regard, the guard 250 can include a first set of attachment features 272 and a second set of attachment features 274. Each of the first and second sets of attachment features 272 and 274 can be configured to interface with the guard attachment feature 254 disposed on the housing 228 (see FIG. 12). After selecting an intended use for the string trimmer 100, the user can select the appropriate set of attachment features 272 or 274 in view thereof.

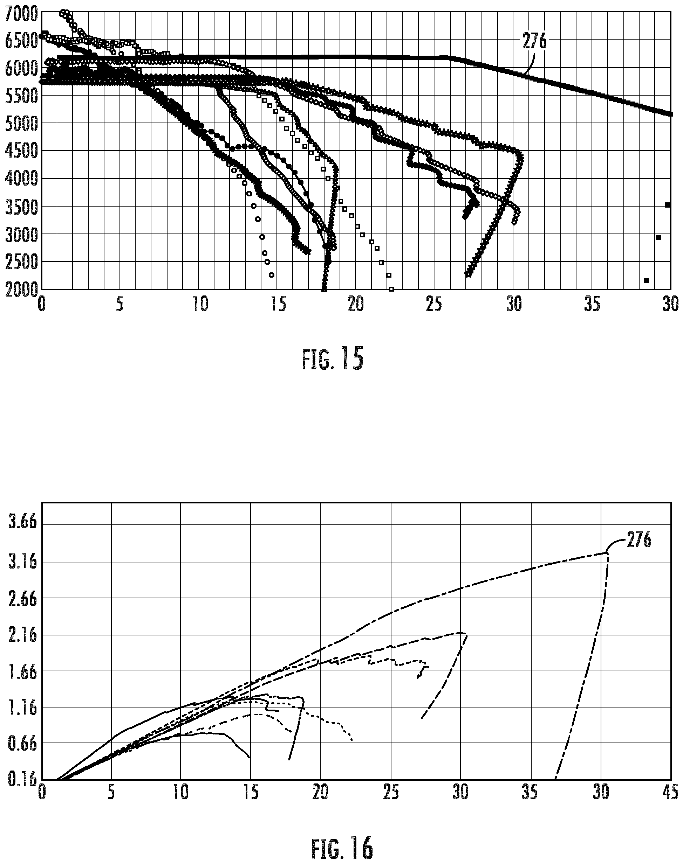

String trimmers 100 described herein in accordance with one or more embodiments may operate at higher peak power than known string trimmers, particularly when operating at maximum output capability. The features and attributes described herein can provide a stable operating platform at high peak power where the string trimmer 100 is driving the string 242 to rotate at elevated speeds (e.g., in excess of 6000 revolutions per minute) with torque, as measured in inch*pounds, in excess of 26.0. Such numbers are unachievable by other known string trimmers, regardless of the mode of operation. Referring to FIG. 15, a graph is provided illustrating the rotational speed of string on the Y-axis and torque on the X-axis. The string trimmer 100 described herein is depicted by line 276. Other tested string trimmers are depicted by the other lines provided in the graph. As depicted, after reaching an operating speed greater than 6,000 revolutions per minute (6,000 RPM), the string trimmer 100 maintains a fixed operating speed at the torque increases from 0 in*lbs to approximately 26 in*lbs. Only one other string trimmer was able to achieve a fixed operating speed at torques in excess of 15 in*lbs, however that string trimmer experienced reduced rotational speed starting at 16 in*lbs of torque. The string trimer 100 maintains an operational speed in excess of 5000 RPM up to 40 in*lbs of torque. No other string trimmer was able to achieve a torque greater than 31 in*lbs, let alone a torque greater than 31 in*lbs with an operating speed in excess of 5000 RPM. As such, other string trimmers may experience reduced power output under higher operating loads (i.e., at higher torques). This can be experienced by the user and is often referred to as "bogging". The user experiences bogging as a result of the string trimmer receiving insufficient power output (torque) to achieve the desired cutting performance. For instance, thick vegetation may require high amounts of torque to cut through. Underpowered string trimmers like those with test results depicted in FIG. 15 start bogging down when torque requirements exceed 6 in*lbs, with all tested string trimmers (other than the string trimmer 100 described herein) bogging down by 16 in*lbs of torque. In fact, no tested string trimmer (other than the string trimmer described herein) continued running past 31 in*lbs of torque.

String trimmers 100 described herein can operate at elevated torque while maintaining desired operating speeds as a result of the features described herein. String trimmers 100 described herein can thus operate in heavy vegetation without experiencing bog, or at least perform better than other string trimmers when encountering heavy vegetation. Moreover, the string trimmer 100 described herein can be used and operated by a single operator without requiring any additional carrying equipment or supports to comfortably operate the string trimmer 100.

FIG. 16 illustrates a graph depicting output horsepower (Hp) on the Y-axis and torque on the X-axis. As depicted, the string trimmer 100 described herein has a peak output power of approximately 3.2 Hp whereas the next closest tested string trimmer had a peak output power of approximately 2.16 Hp. Thus, string trimmers 100 described herein can achieve a nearly 50% performance gain as compared to the next closest string trimmer.

Further aspects of the invention are provided by one or more of the following embodiments:
Embodiment 1. A string trimmer comprising: a housing; a control board including control circuitry; a frame coupled to the control board; and an isolator disposed between the housing and the frame, wherein the frame is supported relative to the housing by the isolator, and wherein the isolator comprises a shock absorbing material.
Embodiment 2. The string trimmer of any one or more of the embodiments, the frame comprises: a flange configured to be disposed around a perimeter of the control board; and a mounting portion extending from the flange, the mounting portion defining a mounting surface for supporting the control board.
Embodiment 3. The string trimmer of any one or more of the embodiments, wherein the frame extends continuously around an entire perimeter of the control board.
Embodiment 4. The string trimmer of any one or more of the embodiments, wherein the housing defines a channel, wherein the isolator is disposed at least partially within the channel, wherein the isolator comprises a frame receiving area, and wherein the frame is receivable in the frame receiving area.
Embodiment 5. The string trimmer of any one or more of the embodiments, wherein the frame is only supported by the isolator, and wherein no portion of the frame contacts the housing.
Embodiment 6. The string trimmer of any one or more of the embodiments, wherein the isolator comprises an elastomeric material, and wherein the frame comprises a metal.
Embodiment 7. The string trimmer of any one or more of the embodiments, wherein housing comprises a first portion and a second portion, wherein the frame is insertable into the isolator when the first and second portions are detached from one another, and wherein the frame is retained by the isolator when the first and second portions are coupled together.
Embodiment 8. The string trimmer of any one or more of the embodiments, wherein the string trimmer further comprises a working head and an elongated element extending between the working head and the housing.
Embodiment 9. A method of servicing a string trimmer, the method comprising: opening a housing of a gearbox associated with the string trimmer, the gearbox disposed between a motor of the string trimmer and a drive shaft of the string trimmer, wherein opening the housing exposes an output shaft of the motor; operating on a nut coupled to the output shaft of the motor to remove the nut from the output shaft; axially translating a pinion from the output shaft, the pinion having been previously secured to the output shaft by the nut; installing a replacement pinion on the output shaft, wherein installing the replacement pinion comprises axially translating the replacement pinion onto the output shaft; reinstalling the nut onto the output shaft; and operating on the nut to secure the replacement pinion on the output shaft.
Embodiment 10. The method of any one or more of the embodiments, wherein axially translating the pinion is performed by translating the pinion along a splined interface formed between the pinion and the output shaft, and wherein axially translating the pinion is performed without a tool.
Embodiment 11. The method of any one or more of the embodiments, wherein the nut comprises a hex nut, wherein reinstalling the nut comprising aligning the nut with the output shaft, and wherein operating on the nut comprises threading the nut onto an engagement surface of the output shaft until the pinion is prevented from translating along the output shaft.
Embodiment 12. A string trimmer comprising: a housing; a working head; and an elongated element extending between the housing and the working head, wherein the working head comprises: a housing; an axle disposed in the housing to drive a string about a rotational axis; and a counterweight disposed between the housing and the string.
Embodiment 13. The string trimmer of any one or more of the embodiments, wherein the counterweight has a mass of at least 200 grams (g).
Embodiment 14. The string trimmer of any one or more of the embodiments, wherein the counterweight is disposed in an opening above the string and below a driven gear, the driven gear configured to receive a drive force from a motor of the string trimmer.
Embodiment 15. The string trimmer of any one or more of the embodiments, wherein the counterweight is interchangeable with a plurality of different counterweights each having a different mass.
Embodiment 16. The string trimmer of any one or more of the embodiments, wherein the housing of the string trimmer comprises a battery receiving area, a first battery, and a second battery, wherein the first and second batteries are removable from the battery receiving area, and wherein the counterweight is selected to offset a weight of the first and second batteries about a pivot point of the string trimmer.
Embodiment 17. The string trimmer of any one or more of the embodiments, wherein the string trimmer further comprises an auxiliary handle movably disposed along the elongated element, wherein the auxiliary handle comprises: a bale handle; a receiving area defined at least in part by the bale handle; a locking plate; and a fastener configured to removably couple the locking plate to the bale handle to capture the elongated element in the receiving area, wherein the bale handle comprises an opening defining a shelf and an insert disposed in the opening, and wherein the fastener is threadably coupled to the insert and the shelf prevents the insert from pulling through the bale handle.
Embodiment 18. The string trimmer of any one or more of the embodiments, wherein the bale handle has a hollow core, and wherein the bale handle is overmolded with a secondary material different than a material of the bale handle.
Embodiment 19. The string trimmer of any one or more of the embodiments, further comprising a receiving surface, wherein the elongated element is disposed between the receiving surface and the locking surface when the elongated element is captured in the receiving area, and wherein the receiving surface is separate from the bale handle.
Embodiment 20. The string trimmer of any one or more of the embodiments, wherein the string trimmer further comprise a motor having an output shaft, a drive shaft coupled to the axle, and a gearbox disposed between a motor and a drive shaft, wherein the output shaft supports a pinion that transfers rotation from the output shaft to the drive shaft, and wherein the pinion is retained on the output shaft by a nut that is threadable relative to the output shaft.
Embodiment 21. A string trimmer comprising: a housing; a motor disposed in the housing to drive a string to rotate about a central axis, wherein the motor is configured to rotatably drive the string to rotate about the central axis at a rotational speed greater than 6000 revolutions per minute (RPM) at a torque greater than 25 inch pounds (in*lb) a control board including control circuitry; a frame coupled to the control board; and an isolator disposed between the housing and the frame, wherein the frame is supported relative to the housing by the isolator, wherein the isolator comprises a shock absorbing material.
Embodiment 22. A string trimmer comprising: a housing; a motor disposed in the housing; a battery in electrical communication with the motor; a working head including a rotating assembly; an elongated element extending between the housing and the working head; and a drive shaft disposed at least partially in the elongated element, the drive shaft coupling the motor to the working head to rotatably drive the rotating assembly when the motor is activated, wherein the motor is configured to rotatably drive the rotating assembly at a rotational speed greater than 6000 revolutions per minute (RPM) at a torque greater than 25 inch pounds (in*lb).
Embodiment 23. The string trimmer of any one or more of the embodiments, wherein the string trimmer has a peak power output greater than 3 horsepower (Hp).
Embodiment 24. The string trimmer of any one or more of the embodiments, wherein the motor is configured to maintain the rotating assembly at a fixed rotational speed for torque outputs up to 26 in*lb.
Embodiment 25. The string trimmer of any one or more of the embodiments, wherein the rotating assembly comprises a string, and wherein the string defines a swath dimension greater than 17 inches.
Embodiment 26. The string trimmer of any one or more of the embodiments, further comprising: a control board including control circuitry; a frame coupled to the control board; and an isolator disposed between the housing and the frame, wherein the frame is supported relative to the housing by the isolator, and wherein the isolator comprises a shock absorbing material.
Embodiment 27. The string trimmer of any one or more of the embodiments, further comprising a gearbox disposed between the motor and a driveshaft disposed in the elongated element, wherein the gearbox comprises: a first housing portion; a second housing portion removable from the first housing portion; a pinion gear coupled to an output shaft of the motor; a nut threadably coupled to the output shaft to secure the pinion gear to the nut.
Embodiment 28. The string trimmer of any one or more of the embodiments, further comprising a guard disposed around a portion of the rotating assembly, wherein the guard is interchangeable between two different operating positions with respect to the rotating assembly.
Embodiment 29. The string trimmer of any one or more of the embodiments, wherein the working head comprises a housing including an opening disposed between a first portion of the housing and a second portion of the housing, wherein the first portion of the housing is spaced apart from the second portion of the housing by a gap, wherein the elongated element is insertable into the opening and secured therein by drawing the first and second portions of the housing together, and wherein a seal is disposed in the gap and compressed by the first and second portions of the housing

The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A string trimmer comprising:
a housing;
a control board including control circuitry;
a frame coupled to the control board; and
an isolator disposed between the housing and the frame,
wherein the frame is supported relative to the housing by the isolator, and
wherein the isolator comprises a shock absorbing material.

2. The string trimmer of claim 1, the frame comprises:
a flange configured to be disposed around a perimeter of the control board;
and
a mounting portion extending from the flange, the mounting portion defining a mounting surface for supporting the control board.

3. The string trimmer of claim 2, wherein the frame extends continuously around an entire perimeter of the control board.

4. The string trimmer of any one of claims 1 or 2, wherein the housing defines a channel, wherein the isolator is disposed at least partially within the channel, wherein the isolator comprises a frame receiving area, and wherein the frame is receivable in the frame receiving area.

5. The string trimmer of any one of claims 1 to 4, wherein the frame is only supported by the isolator, and wherein no portion of the frame contacts the housing.

6. The string trimmer of any one of claims 1 to 5, wherein the isolator comprises an elastomeric material, and wherein the frame comprises a metal.

7. The string trimmer of any one of claims 1 to 6, wherein housing comprises a first portion and a second portion, wherein the frame is insertable into the isolator when the first and second portions are detached from one another, and wherein the frame is retained by the isolator when the first and second portions are coupled together.

8. The string trimmer of any one of claims 1 to 7, wherein the string trimmer further comprises a working head and an elongated element extending between the working head and the housing.

9. A string trimmer comprising:
a housing;
a working head; and
an elongated element extending between the housing and the working head,
wherein the working head comprises:
a housing;
an axle disposed in the housing to drive a string about a rotational axis; and
a counterweight disposed between the housing and the string.

10. The string trimmer of claim 9, wherein the counterweight has a mass of at least 200 grams (g).

11. The string trimmer of any one of claims 9 or 10, wherein the counterweight is disposed in an opening above the string and below a driven gear, the driven gear configured to receive a drive force from a motor of the string trimmer.

12. The string trimmer of any one of claims 9 to 11, wherein the counterweight is interchangeable with a plurality of different counterweights each having a different mass.

13. The string trimmer of any one of claims 9 to 12, wherein the housing of the string trimmer comprises a battery receiving area, a first battery, and a second battery, wherein the first and second batteries are removable from the battery receiving area, and wherein the counterweight is selected to offset a weight of the first and second batteries about a pivot point of the string trimmer.

14. The string trimmer of any one of claims 9 to 13, wherein the string trimmer further comprises an auxiliary handle movably disposed along the elongated element, wherein the auxiliary handle comprises:
a bale handle;
a receiving area defined at least in part by the bale handle;
a locking plate; and
a fastener configured to removably couple the locking plate to the bale handle to capture the elongated element in the receiving area,
wherein the bale handle comprises an opening defining a shelf and an insert disposed in the opening, and
wherein the fastener is threadably coupled to the insert and the shelf prevents the insert from pulling through the bale handle.

15. The string trimmer of claim 14, wherein the bale handle has a hollow core, and wherein the bale handle is overmolded with a secondary material different than a material of the bale handle.
